# EUROPÄISCHE PATENTSCHRIFT

(11) **EP 0 581 142 B1**
(45) Veröffentlichungstag und Bekanntmachung des Hinweises auf die Patenterteilung: **08.04.1998**
(21) Anmeldenummer: 93111439.1
(22) Anmeldetag: 16.07.1993
(51) Int. Cl.: H04B 10/06

(54) **Einrichtung und Verfahren zum Betreiben von Empfangsdioden**
Apparatus and method of operation of receiving diodes
Dispositif et procédé d'opération de diodes de réception

(30) Priorität: 31.07.1992 DE 4225456
(43) Veröffentlichungstag der Anmeldung: 02.02.1994
(73) Patentinhaber: SIEMENS AKTIENGESELLSCHAFT, 80333 München (DE)
(72) Erfinder: Zierhut, Hermann, Dipl.-Ing., D-81739 München (DE)

(56) Entgegenhaltungen:
- EP-A- 0 372 742
- DE-A- 3 315 989
- GB-A- 2 222 734
- PATENT ABSTRACTS OF JAPAN vol. 7, no. 194 (E-195)(1339) 24. August 1983 & JP-A-58 096 435 (ALPS DENKI)
- PATENT ABSTRACTS OF JAPAN vol. 12, no. 461 (E-689)5. Dezember 1988 & JP-A-63 184 424 (STANLEY ELECTRIC)

## Beschreibung

Die Erfindung bezieht sich auf eine Empfangseinrichtung für Wellen aus einem Bereich von Lichtwellen und benachbarten Frequenzen, insbesondere Infrarotlicht, die gegen Störungen geschützt ist.

Bei Übertragungstrecken für Infrarotlicht stören in der Praxis die Quecksilberlinien von Leuchtstofflampen, die mit der Betriebsfrequenz des die Leuchtstofflampe speisenden Netzgerätes moduliert sind. Man ist daher bemüht, eine Einstellung außerhalb von Störbereichen zu finden.

Der Erfindung liegt die Aufgabe zugrunde, eine Einrichtung und ein Verfahren zu entwickeln, Empfangsdioden außerhalb von Störungsbereichen zu betreiben.

Die Lösung der geschilderten Aufgabe erfolgt nach der Erfindung durch eine Empfangseinrichtung nach Patentanspruch 1. Eine in Sperrichtung betriebene Empfangsdiode, insbesondere eine Infrarot-Empfangsdiode (IR-Empfangsdiode), die ein Bandpaßverhalten für die Lichtwellenlängen aufweist, wird mit einer Iduktivität zusammengeschaltet, die auf die innere Kapazität der Empfangsdiode so abgestimmt ist, daß sie bei einer als Betriebs-Trägerfrequenz gewünschten Frequenz außerhalb der Störfrequenz in Resonanz ist, siehe z.B. GB-A-2 222 734. Beispielsweise kann in der Praxis eine Betriebsfrequenz von 450 kHz günstig sein. Durch das Bandpaßverhalten der Empfangsdiode wird die Empfangseinrichtung ohnehin nur in einem bestimmten Lichtwellenlängen sensibel. Wesentlich ist jedoch die Erkenntnis, daß die innere Kapazität der Empfangsdiode es ermöglicht, auf eine Resonanzfrequenz abzustimmen und diese so zu legen, daß sie einer gewünschten Betriebsträgerfrequenz entspricht. Diese Betriebsträgerfrequenz kann so gewählt werden, daß sie außerhalb von bekannten Störungsfrequenzen liegt.

Die Abstimmung einer Schottky-Photodiode, also einer Photodiode, durch eine Gleichspannung in Sperrichtung auf verschiedene innere Kapazitäten und ihr Einsatz in Hochfrequenzschaltungen als einstellbare Kapazität ist bekannt (US-A-5 029 240), der Einsatz als Empfangsdiode mit Bandpaßverhalten ist jedoch nicht herzuleiten.

Nach einer Weiterbildung wird bei dem Verfahren gemäß Anspruch 2 zum Abstimmen der geschilderten Empfangseinrichtung folgendermaßen vorgegangen:
An der Resonanzschaltung aus Empfangsdiode und Induktivität wird in einem Einstellmodus die Betriebsträgerfrequenz in Überlagerung mit einer größeren Gleichspannung in Sperrichtung hinsichtlich der Empfangsdiode angelegt. Die Gleichspannung wird von einer Spannungsquelle geliefert und in einem Bereich verändert, in dem an der Schaltung ein Spannungsmaximum auftritt. Die dem Spannungsmaximum zugeordnete Gleichspannung der Spannungsquelle wird abgespeichert. Im Betriebsmodus wird eine Gleichspannung in abgespeicherter Höhe angelegt, wobei die Betriebsfrequenz von der Empfangsdiode während des Betriebs empfangen wird. Durch die Veränderung der Gleichspannung im Einstellmodus wird die innere Kapazität der Empfangsdiode verändert: Mit steigender Spannung nimmt die Kapazität der Empfangsdiode ab. Dadurch wird das Schwingkreisverhalten entsprechend verändert.

Eine Empfangseinrichtung zur Durchführung des geschilderten Verfahrens kann eine Empfangsdiode in Resonanzschaltung aufweisen, die im Betriebsmodus an einem Mikroprozessor angeschlossen ist, der eine Gleichspannung in Sperrichtung anlegt. Nach einer Weiterbildung kann der Betriebsmodus von Zeit zu Zeit turnusmäßig von einem Einstellmodus abgelöst werden. Wenn der Einstellmodus in der Empfangseinrichtung durchgeführt wird, erübrigt es sich, einen Einzelabgleich in der Fertigung vorzunehmen. Der Einstellmodus kann in einer einfachen Einstellroutine mittels eines Mikroprozessors durchgeführt werden. Wenn der Betriebsmodus turnusmäßig durch den Einstellmodus abgelöst wird, stellt man sicher, daß von Zeit zu Zeit ein Abgleich durchgeführt wird, der sicherstellt, daß die Empfangseinrichtung nur im günstigsten Betrieb arbeitet.

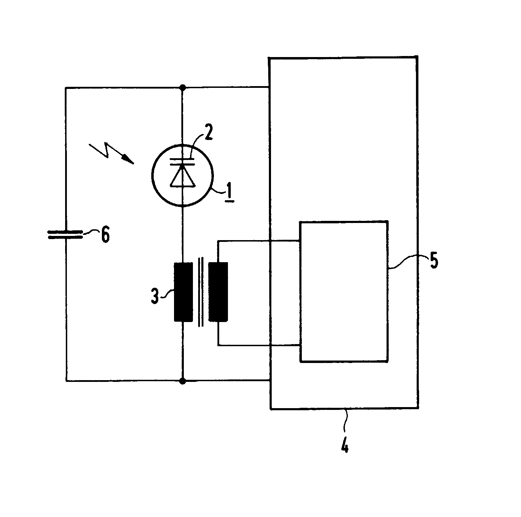

Die Erfindung soll nun anhand eines in der Zeichnung grob schematisch wiedergegebenen Ausführungsbeispiels näher erläutert werden:

Eine Empfangsdiode 1 mit innerer Kapazität 2, beispielsweise eine SIEMENS-Diode der Type F0 216-A, spricht auf IR-Licht an, sie wird mit einer Induktivität 3 zur Kompensation der inneren Kapazität 2 zusammengeschaltet, im Ausführungsbeispiel in Serie. Die Induktivität wird so ausgelegt, daß sie mit der inneren Kapazität 2 der Empfangsdiode 1 bei einer Sperrspannung von beispielsweise 3 bis 5 V bei der gewünschten Betriebsfrequenz, beispielsweise 450 kHz, in Resonanz ist. Die Schaltung aus Empfangsdiode 1 und Induktivität 3 ist an einer Einstell- und Betriebseinrichtung 4 mit Mikroprozessor angeschlossen. Im Einstellmodus liefert die Einrichtung 4 eine gewünschte Trägerfrequenz und eine höhere Gleichspannung, die die Empfangsdiode 1 in Sperrrichtung beaufschlagt. Im Betriebsmodus liefert die Einrichtung 4 die Gleichspannung, bei der im Einstellmodus zu einer bestimmten gewünschten Betriebsfrequenz bzw. Trägerfrequenz Resonanz aufgetreten ist.

Im Ausführungsbeispiel kann die Wechselspannung für den Einstellmodus von einem Verstärker 5 erzeugt werden, der die Wechselspannung induktiv auf die Induktivität 3 aufkoppelt.

Im Ausführungsbeispiel sorgt ein Kondensator 6 als Abblockkondensator mit im Idealfall unendlich hoher Kapazität dafür, daß die Spule mit der Induktivität 3 die Sperrspannung - Gleichspannung an der Empfangsdiode 1 - nicht kurzschließt. Verständlicherweise ist es gleichgültig, ob die Resonanzschaltung in Serien- oder in Parallelschaltung verwirklicht wird, wobei bei einer Parallelschaltung der Kondensator 6 mit der Funktion eines Abblockkondensators dann in Serie zur Induktivität 3 anzuordnen ist.

Bei der erfindungsgemäßen Einrichtung und dem Verfahren zum Betreiben von Empfangsdioden kann die Abstimmung im Einstellmodus also durch einen ohnehin erforderlichen Mikroprozessor mittels einer einfachen Einstellroutine im jeweiligen Gerät, in dem die Empfangseinrichtung eingebaut ist, vorgenommen werden. Die Resonanzabstimmung erfolgt hierbei lediglich durch das Verändern einer Gleichspannung, so daß die Abstimmung mit einfachsten Mitteln möglich ist. Die der Resonanz zugeordnete Gleichspannung kann in einem Speicher, beispielsweise einem EEPROM abgelegt werden.

## Patentansprüche

1. Empfangseinrichtung für Wellen aus einem Bereich von Lichtwellen und benachbarten Frequenzen, insbesondere Infrarotlicht, die gegen Störungen, insbesondere gegen die Quecksilberlinien von Leuchtstofflampen, dadurch geschützt ist, daß eine in Sperrichtung betriebene Empfangsdiode (1), insbesondere IR-Empfangsdiode, die ein Bandpaßverhalten aufweist, mit einer Induktivität (3) zusammengeschaltet wird, die auf die innere Kapazität (2) der Empfangsdiode (1) so abgestimmt ist, daß sie bei einer als Betriebs-Trägerfrequenz gewünschten Frequenz, beispielsweise 450 kHz, außerhalb der Störfrequenz in Resonanz ist, dadurch gekennzeichnet, daß die Empfangsdiode (1) in Resonanzschaltung im Betriebsmodus an einer Einstell- und Betriebseinrichtung mit Mikroprozessor angeschlossen ist, die eine Gleichspannung in Sperrichtung anlegt.

2. Verfahren zum Abstimmen einer Empfangseinrichtung für Wellen aus einem Bereich von Lichtwellen und benachbarten Frequenzen
**dadurch gekennzeichnet,**
daß an einer Resonanzschaltung aus Empfangsdiode (1) und Induktivität (3) in einem Einstellmodus die Betriebsträgerfrequenz in Überlagerung mit einer größeren Gleichspannung in Sperrichtung hinsichtlich der Empfangsdiode angelegt wird und die von einer Spannungsquelle gelieferte Gleichspannung in einem Bereich verändert wird, in dem an der Schaltung ein Spannungsmaximum auftritt, worauf die dem Spannungsmaximum zugeordnete Spannung der Spannungsquelle abgespeichert wird, worauf Betriebsbereitschaft in einem Betriebsmodus dadurch hergestellt wird, daß an der Schaltung eine Gleichspannung in abgespeicherter Größe angelegt wird, wobei die Betriebsfrequenz von der Empfangsdiode bei Betrieb empfangen wird.

3. Empfangseinrichtung nach Anspruch 1,
**dadurch gekennzeichnet,**
daß der Betriebsmodus turnusmäßig von einem Einstellmodus abgelöst ist.

## Claims

1. Receiving device for waves from a range of light waves and adjacent frequencies, in particular infrared light, which device is protected against disturbances, in particular against the mercury lines of fluorescent lamps, in that a receiving diode (1) operated in the reverse direction, in particular an IR receiving diode, which has a bandpass behaviour, is connected together with an inductance (3) which is tuned to the inner capacitance (2) of the receiving diode (1) in such a way that at a frequency desired as operating carrier frequency, for example 450 kHz, it is in resonance outside the interference frequency,
characterized in that the receiving diode (1) in resonant circuit in the operating mode is connected to an adjusting and operating device with microprocessor, which device applies a direct voltage in the reverse direction.

2. Method for tuning a receiving device for waves from a range of light waves and adjacent frequencies,
characterized in that to a resonant circuit comprising receiving diode (1) and inductance (3) in an adjusting mode the operating carrier frequency is applied in superposition with a larger direct voltage in the reverse direction with respect to the receiving diode, and the direct voltage supplied by a voltage source is changed in a range in which a voltage maximum occurs at the circuit, whereupon the voltage of the voltage source which is associated with the voltage maximum is stored, whereupon the readiness for operation is produced in an operating mode in that a direct voltage is applied to the circuit in stored quantity, whereby the operating frequency is received by the receiving diode in operation.

3. Receiving device according to claim 1,
characterized in that the operating mode is relieved in rotation by an adjusting mode.

## Revendications

1. Dispositif de réception d'ondes provenant d'un domaine d'ondes lumineuses et de fréquences voisines, notamment la lumière infrarouge, qui est protégée de parasites, notamment des raies du mercure de lampes luminescentes par le fait qu'une diode (1) de réception, notamment une diode de réception infrarouge, que l'on fait fonctionner dans le sens non conducteur et qui a un comportement de passe-bande, est interconnectée à une inductance (3) qui est accordée à la capacité (2) interne de la diode (1) de réception de manière à être en résonance en dehors de la fréquence parasite pour une fréquence souhaitée comme fréquence porteuse de fonctionnement. par exemple 450 kHz, caractérisé en ce que la diode (1) de réception est raccordée en un circuit résonant, en mode de fonctionnement, à un dispositif de réglage et de fonctionnement, qui comporte un microprocesseur et qui applique une tension continue dans le sens non-conducteur.

2. Procédé pour accorder un dispositif de réception pour des ondes provenant d'un domaine d'ondes lumineuses et de fréquences voisines, caractérisé en ce que l'on applique à un circuit résonant constitué de la diode (1) de réception et de l'inductance (3), en un mode de réglage, dans le sens non conducteur relativement à la diode de réception, la fréquence porteuse de fonctionnement superposée à une tension continue assez grande et en ce que l'on fait varier la tension continue fournie par une source de tension dans un domaine dans lequel il apparaît sur le circuit un maximum de tension, on mémorise ensuite la tension de la source de tension associée au maximum de tension, puis on produit un état de service en un mode de fonctionnement par le fait que l'on applique au circuit une tension continue de valeur mémorisée, la fréquence de fonctionnement étant reçue par la diode de réception lors du fonctionnement.

3. Dispositif de réception suivant la revendication 1, caractérisé en ce que le mode de fonctionnement alterne avec un mode de réglage.
